# EUROPEAN PATENT APPLICATION

(11) **EP 1 736 059 A1**
(43) Date of publication of application: **27.12.2006**
(21) Application number: 05447145.3
(22) Date of filing: 21.06.2005
(51) Int. Cl.: A23D 9/00

(54) **Structuring granular composition**

(71) Applicant: Fuji Oil Europe, B-9042 Gent (BE)
(72) Inventor: Ushioda, Toshio, B-9000 Gent (BE); Cleenewerck, Bernard, B-9185 Wachtebeke (BE)
(74) Representative: Luys, Marie-José A.H.

(57) **Abstract**

The present invention relates to an edible granular structuring composition suitable for the production of structured food products having a low content of saturated and trans fatty acids, the granular composition comprising 5-100 wt. % of a glyceride composition and 95-0 wt. % of at least one non-glyceride edible solid material, wt. % being expressed with respect to the total weight of the structuring composition, wherein the glyceride composition comprises a blend of 5 to 85 wt. % of a non-lauric, hard or semi hard fat, containing less than 5 wt. % of TFA with respect to the amount of hard or semi hard fat and 95 to 15 wt. % of a liquid part, the liquid part being selected from at least one liquid oil or at least one liquid diglyceride composition or a blend of two or more of those, where TFA means trans fatty acids; wherein the glyceride composition comprises an amount of fat crystallized in a stable crystalline form; wherein the glyceride composition contains at least 5 wt. % of symmetric SUS-triglycerides with respect to the total amount of glyceride composition wherein S is a saturated fatty acid having 16-18 carbon atoms and U is an unsaturated fatty acid having 18 carbon atoms or more and wherein the glyceride composition has an STFA content of less than 55 wt. %, wherein STFA is the sum of the saturated and trans fatty acids present in the glyceride composition.

## Description

### 1. Background of the invention.

In a wide variety of food products, fat is used as a major component not only because of its nutritional importance, but also because of its wide range of functional properties. Fat has been found to be an ingredient which may be suitably combined with a wide variety of dry ingredients, which in many cases are present as a powder*.* In these applications the fat will mostly be added in the liquid state or under shortenised form to a homogeneous mass of the dry ingredients. In other applications fat is combined with water and some dry ingredients. A homogeneous product is obtained when emulsifying the fat with the water.

One of the most important functional properties of the fat is its effect on the structure of the final food product in which it is incorporated. The structure of a product depends on both its recipe - i.e. the amount and nature of the fat and the other ingredients - and on the process according to which the product is made. For example processing steps such as emulsification, heating, tempering, etc have a significant effect on the structure of the product obtained.

Examples of food products where the nature of the incorporated fat has a prominent effect on the structure are chocolate, which has a hard structure because of the incorporation of cocoa butter which is a hard fat; confectionery creams like medium hard sandwich creams containing a medium hard fat; spreads for example chocolate spreads, which contain high amounts of liquid oil to obtain the typical soft and spreadable end product. In each of these examples fat is combined with at least one powdery ingredient (for example sugar, milk powder, cocoa powder, etc..).

Bearing in mind the intended application and the final structure envisaged for this application, a fat will be chosen with a specific Solid Fat Content (SFC) as a function of temperature. Typical SFC-profiles for different applications are illustrated in EP 739 589 table 22a. The SFC-profile depends mainly on the nature of the fatty acids making up the (tri)glycerides of the fat, on the triglyceride composition, and on the method used to solidify the fat ― in particular the crystallisation time and temperature, whether the product has been subjected to tempering or not, etc. Whether a fat at a certain temperature is liquid or solid is determined not only by the chain length of the fatty acids, but in particular by the type of fatty acid, i.e. whether it is saturated or non-saturated, in case of non-saturated fatty acids, the type of isomer, cis or trans. For products that need a rather firm structure, usually a fat with a rather high SFC-profile will be selected, meaning that the fat will have a quite high amount of saturated fatty acids and/or trans isomers of non-saturated fatty acids. Saturated fatty acids (SAFA) are abundantly present in natural fats like cocoa butter, palm oil, palmkernel oil, coconut oil, tallow, etc.. Trans fatty acids (TFA) of natural origin are mainly found in ruminant fats. Natural vegetable oils and fats do not contain this trans isomer. Although TFA are unsaturated fatty acids, their structure and melting profile is much closer to the corresponding saturated fatty acid than their cis-form.

Although a wide range of hard structural fats suitable for producing structured products is naturally available, there is still a big need for fats with a solid structure and a major fatty acid chain ranging from C16 to C20. In view thereof, hydrogenation of liquid oils like soy, rapeseed, sunflower, groundnut oil to hard fats has been widely used. Hydrogenation of the liquid oil, also called "hardening" of oils and fats, is usually carried out in the presence of a catalyst. Hydrogenation not only involves conversion of unsaturated fatty acids into saturated fatty acids, but also conversion of cis-unsaturated fatty acids into transisomers. Both, the increased amount of SAFA and TFA contribute in converting a liquid oil upon hydrogenation, into a hard fat.

However, although from a functional point the use of a fat with a rather high amount of SAFA and/or TFA will be recommended to obtain the desired structure, from a nutritional point it is highly preferred to limit the amount of these fatty acids. It has been demonstrated that consumption of SAFA and TFA increases the risk to the occurrence of cardiovascular diseases. Therefore official instances, like WHO, have issued maximum recommended levels of daily intake of SAFA and TFA. Studies on the consumption patterns of fats in food, like the so-called Transfair study, conducted in a number of European countries, indicate that the daily intake of both SAFA and TFA is in a large number of countries far too high. There is thus a need for food systems and food products, containing glycerides with a limited level of SAFA and/or TFA, which nevertheless show the desired hard or semi-hard structure needed in the final application. There is thus a particular need to a glyceride containing ingredient, which contains a limited amount of SAFA and TFA, but which nevertheless is capable of implying the desired structuring properties to a final food product.

### 2. Prior art.

From EP 719 090 healthy fats for use in spreads or margarine are known with a saturated fatty acid content less than 35 wt. %. The fats further contain 5-45 wt. % S2U, 0-60 wt. % SU2, 5-95 wt. % U3 and 0-8 wt. % S3. The diglyceride content is less than 5 wt. % as it is believed that the presence of diglycerides in margarine fats has a negative impact on the crystallization behavior. The fats disclosed in EP-A-719.090 are characterized by a flat SFC-profile which is typical for margarines, expressed as (N5-N20) being less than 10, where N5 and N20 mean the SFC at 5 and 20°C. Structuring properties of the fat are mainly attributed to the presence of 1.5 - 4 wt. % of behenic acid in the fat. Water in oil emulsions prepared from these fats show a good hardness. When producing the spread, the fat, water and some of the other ingredients and additives are mixed and pasteurized at 85°C, followed by a cooling and crystallization process.

EP-A-875.152 relates to lamination fats with improved lamination properties, good structuring properties in particular a good hardness and a low saturated fatty acid content. According to EP-A-875.152 this is achieved by the presence of a minimum amount of long chain fatty acids in the triglycerides, in particular by the presence of a minimum amount of arachidic and behenic acid. The fat blend further comprises 70 - 85 wt. % of a liquid oil and at least 15 wt. % of (H2M+H3) triglycerides, and has a saturated fatty acid content of less than 50 wt. %, a N35 < 35 and an N20 of 15-40 wt. %. H is saturated fatty acids with at least 16 carbon atoms. M is saturated fatty acids with 6-14 C atoms. The blend is characterised by a certain minimum Stevens hardness so that it can be applied in puff pastry.

EP-A-687.142 discloses bakery fats with a saturated fatty acid content of less than 35 wt. %, a trans fatty acid content of less than 5 wt. %, a N20 of at least 10%, a S2U content of 5 - 50 wt. %, a (U2S+U3) content of at least 35 wt. % and a S3 content of 0-37 wt. %. It is explained that the properties of the baked products are a least similar to those of products having a higher saturated fatty acid content. To achieve this the dough fat contains a fat component A which is rich in SUS-triglycerides and preferably contains 5-30 wt. % of behenic acid. From the examples it can be seen that preparation of the dough is done by blending molten fat components, followed by cooling the melt and cool storage overnight if so desired, so as to obtain a plasticised fat that suitable for mixing with the remaining dry ingredients of the dough and water.

EP-A-731.645 discloses blends of a sugar and a triglyceride component with a SAFA content which is lower than usually applied, i.e. below 45 wt. %. Thereto the triglyceride component comprises at least 40 wt. % of SU2 and 3-50 wt. % of S2U, it is free of TFA and has an N20 of at least 35 and an N30 of less than 10. It is explained that the triglyceride component contains at least 10 wt. % of behenic acid, that the triglyceride component contains less than 25 wt. % of StUSt ( U = Unsaturated Fatty Acid; St = C18-0) and that the presence of 0.1 to 10 wt. % of trisaturated triglyceride, especially from palm oil stearin, gives better structuring properties. The blends are suitable for use in filling fats and ice cream coatings. They show the advantage of having a limited SAFA-content while displaying a good product performance, meaning an acceptable texture (hardness) and good oral melting characteristics. The fillings and coatings are prepared by mixing the ingredients, roll-refining and conching, followed by a cooling process (called "tempering") to below 20°C, preferably below 15°C. During the cooling process, use can also be made of the addition of a working amount of fat seeds, e.g. cocoa butter seeds. In the examples it is explained that after cooling, the fillings were stored at low temperatures for longer periods (e.g. 16hrs at 7°C followed by 1 week at 13°C or 18 hrs at 13°C in case a seeding agent was used), following which the texture was measured and an acceptable hardness could be found.

All of the above-mentioned patent publications address the problem of providing a structuring fat composition which is low in SAFA, which displays an acceptable hardness and is suitable for use in a final product. Each time this problem is solved by the presence of fats in the fat component which contain behenic and/or arachidic acid as the structuring agent.

EP-A-294.974 relates to a tempering accelerator comprising a powder of stable crystals of a fat or oil having an average particle size of not more than 100 µm. The main component of the fat or oil is a 1,3-saturated-2-unsaturated triglyceride with a total fatty acid carbon number of 50 to 56. In relation to chocolate production, by tempering is meant number of cooling and reheating steps to melt unstable crystals and make them recrystallise in the stable crystal form. By adding the tempering accelerator to the chocolate composition, the usual chocolate tempering process, which requires specific tempering equipment may be simplified or even dispensed with. The tempering accelerator is added to an oily composition during the cooling step. Amounts added to chocolate can range from 0.005 to 10 wt%, based on total fat content. However from the examples it appears that addition of 0.1 wt. % of the accelerator is sufficient to obtain the desired effect, which is a chocolate in the stable crystal form, showing no tendency to blooming. As can be seen from table 1, the fats, rich in 1,3-saturated-2-unsaturated triglycerides, have a SAFA-content of more than 60 wt. %, which is not surprising, taking into account their tryglyceride composition. In most examples the powder is a fat powder, obtained by pulverising it starting from a frozen form. In another example the fat is blended in a 1 to 1 ratio with powdered sugar, frozen in liquid nitrogen and then pulverised.

EP-A-276.548 also relates to a chocolate additive in the form of particles, comprising at least 50, preferably at least 70 wt. % of a glyceride, said glyceride comprising 1,3-saturated-2-unsaturated glycerides, the saturated fatty acids having 20 to 24 carbon atoms. The particles are in a stable crystal form and have an average particle size of no more than 500 µm. The additive may also contain a dispersion medium, which is a powder like for instance milk powder, saccharides, etc.. The additive can be added to chocolate in an amount of 0.1 to 10 wt. %, however when dispersed well, amounts of about 2 wt. % are sufficient. The additives, containing high amounts of BOB, have a SAFA-content of more than 60 wt. %, and are also prepared by a freezing step followed by pulverisation. Afterwards, the solidified and powdered fat can be admixed to a dispersion medium like powdered sugar.

EP-A-321.227 discloses a shortening for a hard butter product, which comprises a crystallized fat comprising as main ingredient 1,3-saturated-2-unsaturated triglycerides with a total fatty acid carbon number of not less than 50 and wherein the main crystals are in a stable form, also comprising amorphous glycerides with at least 2 unsaturated fatty acids. The shortening is in a plasticised or fluidised form and is obtained by mixing the fat components in molten form, followed by a cooling process with kneading. The shortening containing the SUS type triglycerides in the stable form is used as an additive during the cooling and solidification process of a hard butter, such as chocolate, in order to permit dispensing with or simplify the tempering process. The amorphous glyceride component is preferably a hardened oil having a low level of polyunsaturated fatty acids and thus a better oxidation stability. The advantage of a temper seed as a shortening over a powder is that it can be easily dispersed into a molten mass. According to the examples, the amounts added range from 0.1 to 3 wt. % based on the total mix.

The three patent publications discussed above relate to additives used in a powdery or shortenised form that can be added to a chocolate mass or the like for tempering that mass without requiring the conventional tempering operation, i.e. a cooling and reheating process with specially designed equipment. The additive is mostly added in an amount less than 3 wt. % with respect to the chocolate mass. The result is a chocolate product similar to the one obtained with traditional tempering, i.e. a stable product with good gloss, good mold release and good bloom resistance. None of these patent publications relates to the problem of providing a product with low SAFA-content and a hard texture.

### 3. Object of the invention.

It is an object of the present invention to provide a solid food ingredient having improved structuring properties as compared to the state of the art products. With improved structuring properties is meant a food ingredient providing to a food product with a harder structure than could be expected on the basis of the saturated and trans fatty acid content of the fat in that food product.

It is a further object of the present invention to provide such a product having a low saturated and trans fatty acid content, which is suitable to serve as a basis for the production of a food product with a good structure.

It is a further object of this invention to provide a process for the production of such a solid food ingredient, as well as a process for the production of a food product showing a good structure and containing such a solid food ingredient.

### 4. Description of the invention.

This object is achieved with an edible granular **structuring** composition showing the technical features of the characterizing part of the first claim.

Thereto the edible granular structuring composition of this invention, suitable for the production of structured food products having a low content of saturated and trans fatty acids, the granular composition comprising 5-100 wt. % of a glyceride composition and 95-0 wt. % of at least one non-glyceride edible solid material, wt. % being expressed with respect to the total weight of the structuring composition, is characterised in that
- the glyceride composition comprises a blend of 5 to 85 wt. % of a non-lauric, hard or semi hard fat, containing less than 5 wt. % of TFA with respect to the weight of the glyceride composition and 95 to 15 wt. % of a liquid part, the liquid part being selected from at least one liquid oil or at least one liquid diglyceride composition or a blend of two or more of those, where TFA means trans fatty acids
- in that the glyceride composition comprises an amount of fat crystallized in a stable crystalline form
- in that the glyceride composition contains at least 5 wt. % of symmetric SUS-triglycerides with respect to the total amount of glyceride composition, wherein S is a saturated fatty acid having 16-18 carbon atoms and U is an unsaturated fatty acid having 18 carbon atoms or more
- in that the glyceride composition has an STFA content of less than 55 wt. %, wherein STFA is the sum of the saturated and trans fatty acids present in the glyceride composition.

In the above "glycerides" are meant to indicate glycerides that are added to possibly existing ingredients of the composition. Or in other words, natural fats present in their naturally occurring solid matrix - for example oily components present in any cocoamass or nut paste that could be contained in the granular composition - do not contribute to the amount of "glycerides" claimed or described above.

In the above "hard or semi-hard fat" means a vegetable fat with a melting point of at least 25°C.

In the above "stable crystal" form means the IV form or more stable form, preferably the V form or more stable form.

It has surprisingly been found that upon simple blending of the liquid glyceride and the hard fat with a non-glyceride solid material, a granular structuring composition can be obtained suitable for the production of structured food products, with a hardness which is significantly harder than could be expected from its glyceride composition. This result could be achieved upon simple blending of the glyceride ingredients with a non-glyceride solid material, without applying special cooling or tempering equipment, there is no need to apply additional heating upon blending which is energy saving. By carefully selecting the triglyceride composition of the glyceride composition, the hardness could be significantly increased without requiring the presence of triglycerides containing so-called long-chain fatty acids, i.e. fatty acids having more than 20 carbon atoms. In the present invention the presence of these long chain fatty acids is preferably restricted to a minimum as they have been found to adversely affect the hardness of the edible composition of the invention. Therefore, it is preferred that the glyceride composition contained in the edible granular composition of this invention is characterised by a concentration of C22 fatty acids of below 1 wt. % with respect to the total amount of glyceride composition, preferably below 0.5 wt. %.

An improved hardness may be obtained with an edible granular composition which comprises at least 3 wt. % of crystallized fat with respect to the total amount of glyceride composition, wherein at least 30 wt. % of the crystallized fat is crystallized in a stable crystal form. Preferably the glyceride composition contains at least 5 wt. % of crystallized fat with respect to the total amount of glyceride composition, preferably at least 10 wt. %, more preferably at least 15 wt. %. Preferably also least 50 wt. % of the crystallized fat is crystallized in the stable crystal form, preferably at least 70 wt. % with respect to the total amount of crystallized fat.

The edible granular composition of this invention meets the ever increasing requirements by having an STFA content of less than 45 wt. %, preferably less than 35 wt. %, more preferably less than 30 wt. %, most preferably less than 25 wt. %.

In practice, the edible granular composition of this invention will contain between 60-90 wt. % of the at least one non-glyceride edible material, preferably between 65-85 wt. %, most preferably 70-80 wt. % and in that the edible composition contains 10-40 wt. % of the glyceride composition, preferably 15-35 wt. %, most preferably 20-30 wt. %. It is advantageous that the composition of this invention may contain non-glyceride material as well. Suitable examples of the at least one non-glyceride edible material include but are not limited to sugar, wheat flour, starch, skimmed milk powder, WMP or CP or a blend of two or more of these. Within the framework of this invention, non-glyceride edible solid material usually means a powdery product having a fat content of below 50 wt. % (fat being naturally present in that kind of ingredient).

Optimum hardness and structuring properties are achieved when that the hard fat or semi-hard contains at least 25 wt. %, preferably at least 40 wt. %, most preferably at least 55 wt% of SUS-triglycerides, expressed on the total hard or semi-hard fat. Further optimization is achieved when at least 50 wt. % of the SUS triglycerides contained in the granular composition of this invention consists of StUSt and PUSt, preferably at least 70 wt. %, more preferably at least 80 wt. %, in which St is stearic acid. It is preferred that U is oleic acid. The inventors have observed that optimum structuring properties are provided with a granular composition containing StUSt and PUSt triglycerides. This is contrary to the prior art teaching according to which optimum hardness would be obtained with triglycerides containing fatty acids with more than 20 carbon atoms.

It is preferred to have the concentration of SU2 triglycerides in the glyceride composition limited to less than 35 wt. % with respect to the total amount of glyceride composition, preferably to less than 25 wt. % as higher amounts would adversely affect the structuring properties. The concentration of S3 triglycerides in the glyceride composition is preferably kept below 10 wt. % with respect to the total amount of the glyceride composition, preferably below 5 wt. %, most preferably below 2.5 wt% as S3 glycerides cause waxiness and have an adverse effect on the hardness of the composition.

Within the framework of the present invention, the at least one hard or semi-hard fat will mostly be a fat which is a solid or semi-solid fat at room temperature and the at least one liquid oil or liquid diglyceride composition will be liquid at room temperature. Thereby, depending on the envisaged hardness of the food product made with the granular composition of this invention, the total amount of the at least one hard or semi-hard fat with respect to the total amount of the glyceride composition will mostly range from 10-60 wt. %, preferably from 20-45 wt. %, and the total amount of the at least one liquid oil or liquid diglyceride composition will mostly range from 40-90 wt. %, preferably from wt. 55-80 %, with respect to the total amount of the glyceride composition. Higher concentrations of liquid oil or diglyceride will have the effect of decreasing the hardness, higher concentrations of the hard fat are believed to hamper mixing and deteriorate homogeneousness of the composition.

Within the framework of the present invention, a wide variety of liquid oils may be used. Suitable examples include at least one vegetable oil selected from the group of rapeseed oil, corn oil, soy oil, sunflowerseed oil, cotton seed oil, maize oil, olive oil, hazelnut oil, groundnut oil, liquid fractions of palm oil or shea butter, a blend of two or more of the afore mentioned oils and fractions thereof.

Similarly, within the framework of the present invention, a wide variety of hard fats may be used. Suitable examples include cocoa butter, shea butter, illipe, kokum, sal, enzymatically prepared fat containing at least 40 wt. % SUS triglycerides, or a fraction thereof, or a blend of two or more of the afore mentioned fats or fractions thereof.

To achieve optimum homogeneity of the composition of this invention the particles of the granular composition preferably have a mean particle size of smaller than 500 µm, preferably smaller than 250 µm, most preferably smaller than 100 µm. With these dimensions optimum mixing with further components may be achieved, in terms of mixability and homogeneousness of the mixure.

To facilitate mixing, to improve the homogeneity of the above-described edible granular composition and to stimulate the development of stable fat crystals, the glyceride composition is preferably blended with the at least one non-glyceride edible solid material in an at least partly molten form, preferably in completely molten form.

The above-described edible granular composition may be further blended with a second glyceride composition to obtain a final structured product. In that case the second glyceride composition will usually comprise a blend of 0 to 85 wt. % of a hard or semi-hard fat and 100 to 15 wt. % of a liquid part, the liquid part being selected from at least one liquid oil or at least one liquid diglyceride composition, or a blend of two or more of those, the second glyceride composition being mixed with the granular composition in an at least partly molten stage, and whereby the STFA content of the glyceride part of the blend is less than 50 wt. % expressed on that glyceride part.

To limit the content of saturated and trans fatty acids of such a blend, the glyceride part of the thus obtained blend will have an STFA-content of less than 45 wt. %, preferably less than 35 wt. %, more preferably less than 30 wt. %, most preferably less than 25 wt. % with respect to the total weight of the blend.

An optimum mouthfeel and minimum waxiness may be achieved with a blend in which the glyceride part is characterized by a N20 of ≤ 35 %, preferably ≤ 25, more preferably ≤ 20 and a N35 of ≤ 10 %, preferably ≤ 5, wherein N20 and N35 are the solid fat content of the glyceride part. Thereby the SFC is measured using method IUPAC 2.150a.

Blending of the edible granular composition with the second glyceride composition is preferably carried out at a temperature which is not more than 35°C, preferably not more than 30°C. Hereby, the temperature is the average blend temperature.

The inventors have namely found that the use of higher temperatures has an adverse effect on the hardness of the blend. The blending and cooling can be done without a tempering process being necessary. With "tempering process" is meant a process used to stabilise a Beta-type fat in its V or VI form, involving a cooling step followed by a re-heating step to melt unstable crystals and final cooling. The inventors have further found that the hardness of the food product made with the edible granular composition of this invention increases in a relatively short period of time, from an initial hardness observed upon mixing of the glycerides towards a final hardness after a relatively short period of time. Thereby the hardness of the composition seems to remain virtually constant in time and the products do not develop graininess due to recrystallisation of the fat.

Preparation of such a blend is preferably carried out by blending of the edible granular composition with the second glyceride composition, after a period of ageing of the edible granular composition of less than 8 hours, preferably less than 4 hours, more preferably less than 2 hours. The inventors have namely found that extensive ageing does not positively impact the hardness of the blend.

The edible composition may be blended with the second glyceride composition, under circumstances whereby the second glyceride composition is subjected to an at least partial crystallization upon blending with the above-described edible granular composition. This is done to build a solid structure and to optimize hardness of the blend.

The present invention also relates to a food product containing the above-described edible granular composition, the above-described blend and/or the product obtained with the above-described process for producing the edible granular composition and/or the blend. Suitable food products include creams.

The present invention further relates to a structured product containing the above-described edible granular composition, the above-desribed blend and/or the product obtained with the above-described process for producing the edible granular composition and/or the blend. Suitable examples of structured products include creams, fillings.

The present invention additionally relates to the use of the above-described edible granular composition, the above-described blend and/or the product obtained with the above-described process for producing the edible granular composition and/or the blend as a tempering additive.

It is generally remarked that the percentages of crystallised fat in the stable form relative to the total amount of crystallised fat can be determined by comparing DSC analysis on fresh or aged samples with analysis of a sample after 10 days storage at room temperature. 10 days storage is considered as fully stabilized. By taking the corresponding temperature interval for the crystallised fat peak as the stable interval, percentages of stable crystals can be determined in other samples. The temperature program applied in the DSC is thereby as follows : around 20 mg sample is put into an aluminium pan, kept at 20°C for 3 minutes, quickly cooled to - 40°C and kept at that temperature for 3 minutes, followed by increasing temperature at heating a rate of 5°C/min.

The inventors have found that the edible granular composition of the present invention as such may be used as a hardening agent, and that hardening of a fat containing composition may be achieved by incorporation of the granular composition of this invention as such, in the solid, powdery state at the storage temperature of the composition. No heating step is required, to the contrary, heating is to be minimized as it may adversely affect the hardness of the final product. This may be of importance in case any temperature sensitive ingredients are contained in the composition. A product containing the above-described edible granular composition, the above-desribed blend and/or the product obtained with the above-described process for producing the edible granular composition and/or the blend of this invention is a virtually homogenous product with a good structure regardless of its low STFA-content.

### EXAMPLES.

### Example 1: Preparation of a fat blend.

Six different fat compositions were prepared by blending High Oleic Sunflower oil with a hard fat. The weight ratio liquid/hard fat was chosen such that the STFA content of all blends was equal (STFA = SAFA+TFA)

The hard fats used in the various compositions were as follows :
1. StOSt-fat prepared by enzymatic interesterification and fractionation
2. Hard PMF IV 34, which is a POP fat
3. Palm stearine IV, which is a PPP fat
4. Cocoa butter, which is a POSt fat
5. Hydrogenated rapeseedoil, melting point 32°C, which is a fat containing TFA
6. BOB-fat prepared by enzymatic interesterification and fractionation
The fat blends were characterised by following figures. All numbers are given in wt. % with respect to the total weight of the fat blend.

**Table 1.**

| | Blend 1 | Blend 2 | Blend 3 | Blend 4 | Blend 5 | Blend 6 |
|---|---|---|---|---|---|---|
| SFC 5°C | 29,6 | 23,8 | | 25,0 | 17,32 | - |
| SFC 10°C | 26,4 | 18,2 | 19,6 | 20,3 | 12,64 | 24.9 |
| SFC 20°C | 18,8 | 0,8 | 12,9 | 3,0 | 3,88 | 22.8 |
| SFC 30°C | 5,1 | 0,0 | 8,7 | 0,0 | 0,27 | 17.8 |
| SFC 35°C | 0,5 | 0,0 | 7,5 | 0,0 | 0 | 12.4 |
| C-16 | 3,3 | 18,9 | 19 | 10,1 | 4,3 | 2.8 |
| C-18 | 19,8 | 3,9 | 3,9 | 13 | 5,2 | 3.2 |
| C- 22 | 0 | 0 | 0 | 0 | 0 | 16.7 |
| POP | 0 | 18.6 | 7.1 | 4.3 | - | 0.4 |
| POSt | 2.8 | 3.7 | 1.4 | 10.3 | - | 0.4 |
| StOSt | 20.9 | 0 | 0.3 | 7.2 | - | 0.3 |
| BOB | 0 | 0 | 0 | 0 | - | 16.4 |
| MUFA | 68,4 | 68,0 | 66,8 | 68,0 | 68,0 | 66.9 |
| PUFA | 7,2 | 7,7 | 8,7 | 7,7 | 7,5 | 8.4 |
| SAFA | 24,3 | 24,2 | 24,3 | 24,3 | 10,8 | 24.2 |
| TFA | 0,1 | 0,1 | 0,2 | 0,0 | 13,7 | 0.4 |
| STFA | 24,40 | 24,30 | 24,50 | 24,3 | 24,50 | 24.6 |

Where SFC is the solid fat content measured according to lupac method 2.150(a).
MUFA = sum of mono-unsaturated fatty acids
PUFA = sum of poly-unsaturated fatty acids
SAFA = sum of saturated fatty acids
TFA = sum of trans fatty acids
St = Stearic Acid
O = Oleic Acid
P = Palmitic Acid
B = Behenic Acid

### Example 2: Preparation of the powdery ingredient.

A powdery ingredient was prepared according to the following recipe :

**Table 2.**

| ingredient | amount in wt. % with respect to total weight of the composition |
|---|---|
| Sugar | 37 |
| Skimmed Milk Powder | 37 |
| Fat | 26 |
| lecithin | 0,1 |

The procedure used was as follows. After the fat had been molten, sugar and milk powder were mixed with the fat. The mixture was roll refined and left to age for one day at room temperature.

### Example 3: Use of the powdery ingredient as temper seed.

Dark chocolate was completely molten at 45°C, followed by cooling under continuous stirring. When the mixture had a temperature of 29°C, 0.7 wt. % of seeding agent with respect to total chocolate mass was added to the chocolate mass. As a temper seed use was made of the powdery ingredients prepared according to example 2, aged for 1 week. Ingredient 2 was added at a temperature of 26°C.

No tempering, i.e. reheating during cooling was applied. The chocolate was poured into moulds, left in a ventilated cooling device at 5°C for 30' and then at 15°C for another 30'. Thereafter, the tablets were demoulded. Tablets prepared using ingredient 1, 2, 4, 6 showed good demoulding, nice gloss, no signs of bloom : those were well tempered. Tablets prepared using ingredient 3, 5 or no seeding agent showed completely opposite properties: they were not tempered.
The results were as follows:

**Table 3.**

| Temperseed | result |
|---|---|
| Ingredient 1 | well tempered |
| Ingredient 2 | well tempered |
| Ingredient 3 | not tempered |
| Ingredient 4 | well tempered |
| Ingredient 5 | not tempered |
| Ingredient 6 | well tempered |
| Ref : No seeding | not tempered |

From this example it can be concluded that fat blends 1, 2, 4 and 6 contained a sufficient amount of SUS-triglycerides in the stable form. From this example it can be further concluded that blends 1 and 4 made from StOSt and POSt types of fat perform well as temper seed.

From the description of the example it should be clear that the above described preparation procedure was quite simple in comparison with the process disclosed in EP-A-294.974 and EP-A-276.548 where cryogenic process steps were required to produce a powdery temper seed. The above described preparation procedure is also quite simple in comparison with the process disclosed in EP-A-321.227 where special kneading and cooling equipment was used to prepare a shortening.

### Example 4: Use of a powdery ingredient as basis for a confectionery cream

A confectionery cream was prepared according to following recipe:

**Table 4.**

| Ingredient | amount added in wt. % with respect to weight of composition |
|---|---|
| Sugar | 30 |
| Skimmed Milk Powder | 30 |
| Fat | 40 |
| lecithin | 0,1 |

The confectionery cream was prepared according to the following procedure. A cream was made in two steps. In step A, the powdery ingredients described in example 1 were prepared. In step B, an amount of fat chosen from the fats listed in table 1 was molten and added to the mixture obtained in step A. The amount of fat added in step B was chosen such that all creams obtained had the same content of saturated and/or trans fatty acids, i.e. 24.5 wt. % with respect to the total weight of the fat phase. The amount of molten fat added was chosen such that a composition according to table 4 was obtained. Different types of fat were combined.

The thus obtained mixture was mixed with a Kitchenaid K5SS with a standard flat mixer at moderate speed during one minute until a uniform mixture was obtained. The temperature of the blend was measured, the numbers are given in table 5. When in step B blend 3 was used, temperature was a bit higher since melting of fat blend 3 required a higher temperature (ca 57°C) compared to the other fats (40 to 45°C).

A pasty mass was obtained which cooled down and solidified, thereby obtaining a structure, which in the best cases was comparable with a standard sandwich cream.

The thus obtained mass was transferred into a plastic cup with a diameter of 8 cm, until a product layer of 3.5 cm thickness was obtained. The cream was left to cool at room temperature without applying any forced cooling. The samples were stored at room temperature. The hardness of each sample at room temperature was measured after respectively 2 hours and 1 day of storage.

The hardness was measured using a SMS-texture meter equipped with a metal probe of 3 mm diameter. Speed of the probe was 0.5 mm/sec, measuring depth was 10 mm. The results are expressed in g.

The creams were evaluated after 1 week, as regarding graininess and melting sensation in the mouth.

The results are summarized in table 5; comparative tests are indicated by a letter C.

In test 16 a different procedure was applied in that the mass in step B was homogenised at 41 °C. This means that an additional heating step was involved during homogenisation.

**Table 5.**

| Test Nr | Fat step A | Fat step B | T cream | texture 2 Hrs | texture 1 Day | taste |
|---|---|---|---|---|---|---|
| 1 | Blend 1 | Blend 1 | 24,5 | 448 | 541 | good |
| 2 | Blend 1 | Blend 2 | 23,8 | 97 | 270 | good |
| 3 | Blend 1 | Blend 3 | 26,3 | 106 | 238 | waxy |
| 4 | Blend 1 | Blend 4 | 23,6 | 343 | 432 | good |
| 5 C | Blend 1 | Blend 5 | 24,2 | 52 | 111 | waxy |
| 6 | Blend 2 | Blend 1 | 24,6 | 151 | 345 | good |
| 7 C | Blend 2 | Blend 2 | 24 | <10 | <10 | grainy |
| 8 C | Blend 3 | Blend 1 | 24,5 | 13 | 64 | bit grainy |
| 9 C | Blend 3 | Blend 3 | 27,8 | 10 | 11 | very waxy |
| 10 | Blend 4 | Blend 1 | 24,6 | 455 | 659 | good |
| 11 | Blend 4 | Blend 4 | 24,4 | 208 | 481 | good |
| 12 C | Blend 5 | Blend 1 | 24,4 | 22 | 98 | waxy |
| 13 C | Blend 5 | Blend 5 | 24,4 | 7 | 15 | too soft |
| 14 C | Blend 6 | Blend 6 | 30,8 | 186 | 237 | waxy |
| 15 C | Blend 6 | Blend 1 | 26,3 | 31 | 275 | rather waxy |
| 16 C | Blend 1 | Blend 1 | 41,3 | 82 | 150 | grainy |

From the results summarized in table 5 the following conclusions can be drawn.

The best results in terms of texture are obtained when the powdery ingredient prepared in step A is made from blend 1 or blend 4, which contain an StOSt and a POSt type of fat; and when in step B an amount of fat is added chosen from blend 1 or blend 4. Blend 2 has some potential when it is used in combination with blend 1.

Blend 1, which is rich in StOSt, has the additional advantage of giving quick structure, quicker than blend 4, which is rich in POSt.

From test 16 it becomes clear that by heating the blend of the fat and the powder, most of the fat has molten and the stable crystal structure of the fat in the powdery ingredient was lost. Upon solidification a cream was obtained with a very soft and grainy structure compared to test 1, having exactly the same composition, but only test 1 was using the preparation process according to this invention.

The preparation of the creams in this example was simple: no special cooling or tempering equipment was required; there was no additional heating during homogenising, which is a save on energy. This finding is in contradiction to the teaching of EP-A-731.645, where it is explained that the StUSt content of the composition should remain limited, whereas according to this invention the best results are obtained with fats rich in StOSt triglycerides.

It is further alleged by EP-A-731.645 that better structuring properties are achieved with fat blends which comprise between 0.1 and 10 wt. % of trisaturated triglycerides, in particular palm oil stearin. With the present invention it has now been found that the addition of palm stearine to the composition gave worse results in terms of waxiness and hardness (cf. test 1 vs. tests 3 and 8).

Apart from a difference in fat composition, there is also a significant difference in the processing of the cream. According to EP-A-731.645 the ingredients are roll refined and conched (similar to test Nr 16). Finally the fillings were subjected to a strong cooling step, followed by stabilisation at low temperatures for longer periods.

Another unexpected result is that blend 6 with BOB-fat as the hard fat component, did not give a good structure; it performed clearly worse than blend 1 (StOSt-fat). This is in contradiction with the state of the art, teaching that the use of long chain saturated fatty acids like behenic acid, contributes to a better structure.

### Example 5.

In example 5, three different blends were prepared by blending an amount of an StOSt fat as the hard fat component with an amount of various types of liquid oil components. Care was taken that all blends had a similar STFA-content. In the preparation of each both in step A and step B, the same fat blend was used. Preparation of the fat blend, the powdery material and the cream was done as described in examples 1,2 and 4.

The following blends were prepared:
4.1.: Blend 1: StOSt + High Oleic Sunflower Oil
4.2. : Blend 7 : StOSt + rapeseed oil
4.3. : Blend 8 : StOSt + Econa. Econa is a liquid diglyceride, that in certain applications can be used as an alternative to triglyceride oil.

The properties of the thus obtained blends were compared with blend 1. The results are summarised in table 6.

**Table 6.**

| | texture 2 Hrs | texture 1 Day |
|---|---|---|
| Blend 1 | 448 | 541 |
| Blend 7 | 300 | 416 |
| Blend 8 | 428 | 535 |

From the results in table 6 it appears that blends prepared by mixing either High Oleic Sunfloweroil or Econa showed a fully comparable texture. The texture of a fat blend of a hard fat with rapeseed oil was a little softer, but still acceptable.

### Example 6.

In example 6 the effect of the solid fat /liquid fat ratio in step A and step B on the characteristics of a cream as an end product was evaluated.

Care was taken to use in the preparation of the cream a fat composition, which had the same composition on the final cream as in example 4, test 1, or in other words a combination of StOSt-fat and High Oleic Sunflower Oil was used in the preparation of the blends below. The following blends were tested :
5.1.: Blend 9 = Blend 9A in step A + Blend 9B in step B
5.2.: Blend 10 = Blend 10A in step A + Blend 10B in step B

In comparison to blend 1 (Ex 1), 1/3 of the amount of the StOSt-component to be present in the final composition was added to Blend 9A, the residual amount was added to Blend 9B, so that the same composition on the cream as by using twice blend 1 (cf. test 1 Ex 4).

Blend 10 A contained all of the StOSt-component, Blend 10B contained pure High Oleic Sunflower oil.

The preparation of the fat blend, of the powdery material and of the cream was done as described in examples 1, 2 and 4., except that the powdery ingredient was used immediately after roll refining. The following results were obtained for the cream texture after 2 hours Hrs :
- Blend 9 : 988 g
- Blend 10 : 725 g

These results indicate that it is preferable to add the hard SUS-component in both steps, instead of in one.

## Claims

**1.** Edible granular structuring composition suitable for the production of structured food products having a low content of saturated and trans fatty acids, the granular composition comprising 5-100 wt. % of a glyceride composition and 95-0 wt. % of at least one non-glyceride edible solid material, wt. % being expressed with respect to the total weight of the structuring composition, **characterised in that**
- the glyceride composition comprises a blend of 5 to 85 wt. % of a non-lauric, hard or semi hard fat, containing less than 5 wt. % of TFA with respect to the amount of hard or semi hard fat and 95 to 15 wt. % of a liquid part, the liquid part being selected from at least one liquid oil or at least one liquid diglyceride composition or a blend of two or more of those, where TFA means trans fatty acids
- **in that** the glyceride composition comprises an amount of fat crystallized in a stable crystalline form
- **in that** the glyceride composition contains at least 5 wt. % of symmetric SUS-triglycerides with respect to the total amount of glyceride composition wherein S is a saturated fatty acid having 16-18 carbon atoms and U is an unsaturated fatty acid having 18 carbon atoms or more
- **in that** the glyceride composition has an STFA content of less than 55 wt. %, wherein STFA is the sum of the saturated and trans fatty acids present in the glyceride composition.

**2.** Edible granular composition as claimed in claim 1, **characterised in that** the glyceride composition comprises at least 3 wt. % of crystallized fat with respect to the total amount of glyceride composition, wherein at least 30 wt. % of the crystallized fat is crystallized in a stable crystal form.

**3.** Edible granular composition as claimed in claim 1 or 2, **characterised in that** the glyceride composition has an STFA content of less than 45 wt. %, preferably less than 35 wt. %, more preferably less than 30 wt. %, most preferably less than 25 wt. %.

**4.** Edible granular composition as claimed in any one of claims 1-3, **characterised in that** the glyceride composition comprises at least 5 wt. % of crystallized fat with respect to the total amount of glyceride composition, preferably at least 10 wt. %, more preferably at least 15 wt. %.

**5.** Edible granular composition as claimed in any one of claims 1-4, **characterised in that** at least 50 wt. % of the crystallized fat is crystallized in the stable crystal form, preferably at least 70 wt. % with respect to the total amount of crystallized fat.

**6.** Edible granular composition as claimed in any one of claims 1-5, **characterised in that** the edible composition comprises between 60-90 wt. % of the at least one non-glyceride edible material, preferably between 65-85 wt. %, most preferably 70-80 wt. % and **in that** the edible composition contains 10-40 wt. %, % of the glyceride composition, preferably 15-35 wt. %, most preferably 20-30 wt. %.

**7.** Edible granular composition as claimed in any one of claims 1-6, **characterised in that** at least 50 wt. % of the SUS triglycerides consists of StUSt and PUSt, preferably at least 70 wt. %, more preferably at least 80 wt. %, in which St is stearic acid.

**8.** Edible granular composition as claimed in claim 7, **characterised in that** U is oleic acid.

**9.** Edible granular composition as claimed in claim 7 or 8, **characterised in that** at least 50 wt. % of the SUS triglycerides consists of StOSt, preferably at least 70 wt. %, more preferably at least 80 wt. %, in which St is stearic acid and O is oleic acid.

**10.** Edible granular composition as claimed in any one of claims 1-9, **characterised in that** the concentration of SU2 triglycerides in the glyceride composition is less than 35 wt. % with respect to the total amount of glyceride composition, preferably less than 25 wt. %.

**11.** Edible granular composition as claimed in any one of claims 1-10, **characterised in that** the concentration of S3 triglycerides in the glyceride composition is less than 10 wt. % with respect to the total amount of the glyceride composition, preferably less than 5 wt. %, most preferably less than 2.5 wt%.

**12.** Edible granular composition as claimed in any one of claims 1-11, **characterised in that** the concentration of C22 fatty acids in the glyceride composition is less than 1 wt. % with respect to the total amount of glyceride composition, preferably less than 0.5 wt. %.

**13.** Edible granular composition as claimed in claim 12, **characterised in that** the at least one hard or semi-hard fat is a fat which is a solid or semi-solid fat at room temperature and the at least one liquid oil or liquid diglyceride composition is liquid at room temperature, wherein the total amount of the at least one hard or semi-hard fat with respect to the total amount of the glyceride composition ranges from 10-60 wt. %, preferably from 20-45 wt. %, wherein the total amount of the at least one liquid oil or liquid diglyceride composition ranges from 40-90 wt. %, preferably from wt. 55-80 %, with respect to the total amount of the glyceride composition.

**14.** Edible granular composition as claimed in any one of claims 1-13, **characterised in that** the at least one liquid oil comprises at least one vegetable oil selected from the group of rapeseed oil, corn oil, soy oil, sunflowerseed oil, cotton seed oil, maize oil, olive oil, hazelnut oil, groundnut oil, liquid fractions of palm oil or shea butter, a blend of two or more of the afore mentioned oils and fractions thereof.

**15.** Edible granular composition as claimed in any one of claims 1-14, **characterised in that** the hard fat or semi-hard contains at least 25 wt. %, preferably at least 40 wt. %, most preferably at least 55 wt% of SUS-triglycerides, expressed on the total hard or semi-hard fat.

**16.** Edible granular composition as claimed in any one of claims 1-15, **characterised in that** the hard fat or semi-hard comprises cocoa butter, shea butter, illipe, kokum, sal, enzymatically prepared fat containing at least 40 wt. % SUS triglycerides, or a fraction thereof, or a blend of two or more of the afore mentioned fats or fractions thereof.

**17.** Edible granular composition as claimed in any of claims 1-15, **characterised in that** the at least one non-glyceride edible material comprises sugar, wheat flour, starch, skimmed milk powder, WMP or CP or a blend of two or more of these.

**18.** Edible granular composition as claimed in any one of the preceding claims, **characterised in that** the granular composition has a mean particle size of smaller than 500 µm, preferably smaller than 250 µm, most preferably smaller than 100 µm.

**19.** Blend of the edible granular composition as claimed in any one of claims 1-18 with a second glyceride composition, the second glyceride composition comprising a blend of 0 to 85 wt. % of a hard fat or semi-hard fat and 100 to 15 wt. % of a liquid part, the liquid part being selected from at least one liquid oil or at least one liquid diglyceride composition, or a blend of two or more of those, the second glyceride composition being mixed with the granular composition in an at least partly molten stage, and whereby the STFA content of the glyceride part of the blend is less than 50 wt. % expressed on that glyceride part.

**20.** The blend of claim 19, **characterised in that** the glyceride part of the blend has an STFA-content of less than 45 wt. %, preferably less than 35 wt. %, more preferably less than 30 wt. %, most preferably less than 25 wt. % with respect to the total weight of the blend.

**21.** The blend of claim 19 or 20, **characterised in that** the glyceride part of the blend is **characterized by** a N20 of ≤ 35 %, preferably ≤ 25, more preferably ≤ 20 and a N35 of ≤ 10 %, preferably ≤ 5, wherein N20 and N35 are the solid fat content of the glyceride part (SFC according to method IUPAC 2.150a.).

**22.** A process for producing the edible granular composition as claimed in any one of claims 1-18, **characterised in that** the glyceride composition is blended with the at least one non-glyceride edible solid material in an at least partly molten form, preferably in completely molten form.

**23.** A process for producing the edible blend as claimed in claims 19-21, **characterised in that** blending of the edible granular composition with the second glyceride composition is carried out at a temperature which is not more than 35°C, preferably not more than 30°C.

**24.** A process for producing the edible blend as claimed in claim 19-21, **characterised in that** blending of the edible granular composition with the second glyceride composition is carried out after a period of ageing of the edible granular composition of less than 8 hours, preferably less than 4 hours, more preferably less than 2 hours.

**25.** A process as claimed in any one of claims 22-24, **characterised in that** the edible composition is blended with a second glyceride composition, which second glyceride composition is subjected to an at least partial crystallization upon blending with the edible granular composition of any one of claims 1-16, to build a solid structure.

**26.** Food product containing the edible granular composition of any one of claims 1-19, the blend of claim 17 or 18, the product obtained with the process of any one of claims 19-25.

**26.** Structured product containing the edible granular composition of any one of claims 1-19, the blend of claim 17 or 18, the product obtained with the process of any one of claims 19-25.

**27.** Tempering additive containing the edible granular composition of any one of claims 1-19, the blend of claim 17 or 18, the product obtained with the process of any one of claims 19-25.
